(19) Europäisches Patentamt
European Patent Office
Office européen des brevets

(11) **EP 4 124 997 A1**

(12) **EUROPEAN PATENT APPLICATION**

(43) Date of publication:
**01.02.2023 Bulletin 2023/05**

(21) Application number: **21188185.9**

(22) Date of filing: **28.07.2021**

(51) International Patent Classification (IPC):
**G06N 3/04** *(2006.01)*        **G06N 3/08** *(2006.01)*

(52) Cooperative Patent Classification (CPC):
**G06N 3/084; G06N 3/04; G06N 3/082**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Frikha, Ahmed**
  **81549 München (DE)**
• **Krompaß, Denis**
  **81549 München (DE)**

(54) **COMPUTER-IMPLEMENTED METHOD FOR DETERMINING AT LEAST ONE UPDATED MODEL PARAMETER**

(57)    The invention is directed to a Computer-implemented method for determining an updated model parameter, comprising the steps: a. Providing a diverse training data set of a plurality of distinct domains comprising a plurality of labelled data samples (S1); wherein each data sample comprises at least one numerical feature representing the respective data sample; b. Determining at least one subset of the training data set (S2); c. Identifying at least one numerical feature to be corrupted using a relevance attribution method based on the at least one determined subset of the training data set and a supervised machine learning model (S3); d.

Determining at least one corrupted subset of the training data set by corrupting the at least one identified numerical feature to be corrupted (S4); wherein the corrupting comprises replacing the at least one value of the at least one numerical feature to be corrupted by another at least one value at least one numerical feature, deleting the at least one value of the at least one numerical feature or blurring the at least one value of the at least one numerical feature to be corrupted; e. Determining labels by applying the supervised machine learning model on the at least one corrupted subset of the training data set parameterized by at least one current model parameter (S5); f. Updating the at least one current model parameter depending on the determined labels (S6); g. Providing the at least one updated model parameter as output (S7).

Further, the invention relates to a corresponding computer program product and a corresponding technical system.

FIG 1

EP 4 124 997 A1

## Description

### 1. Technical field

The present invention relates to computer-implemented method for determining at least one updated model parameter. Further, the invention relates to a corresponding computer program product and technical system.

### 2. Prior art

Artificial Intelligence ("AI") systems, such as machine learning models, are known from the prior art. The AI systems are software programs whose behavior is learned from data instead of being explicitly programmed. The learning process is called "training" which requires plenty of data and significant computational resources. Thereby, the trained AI system solves a specific task for which it was trained, such as prediction of system properties. Unlike conventional software, the learned behavior of the AI systems highly depends on the data including the parameters used during training, namely training data.

The performance of an AI system will be high when the training data is a representative sample of the data on which the AI system will be applied later in the field. However, in the real-world scenarios domain drifts or domain shifts are commonly encountered. Domain drift means that the distribution shifts between training and test or application data. It is common that a trained AI system performs well after training and that its performance degrades over time as in-field data increasingly differs from the original training data.

Moreover, a set of data from the target domains is not always available. The data collection might be expensive or happens only gradually such as in a cold start situation which is typical for a new hospital or production site. The data collection might also be infeasible, e.g., collecting images from every street of every country in the context of self-driving cars. The target domains can also be unknown at the time of training and deployment.

The domain generalization aims to incorporate knowledge from multiple source domains into a single machine learning model that could generalize well on unseen target domains and remains a challenging task.

It is therefore an objective of the invention to provide a computer-implemented method for determining at least one updated model parameter in an efficient and a reliable manner.

### 3. Summary of the invention

This problem is according to one aspect of the invention solved by a computer-implemented method for determining at least one updated model parameter, comprising the steps:

a. Providing a diverse training data set of a plurality of distinct domains comprising a plurality of labelled data samples; wherein each data sample comprises at least one numerical feature representing the respective data sample;

b. Determining at least one subset of the training data set;

c. Identifying at least one numerical feature to be corrupted using a relevance attribution method based on the at least one determined subset of the training data set and a supervised machine learning model;

d. Determining at least one corrupted subset of the training data set by corrupting the at least one identified numerical feature to be corrupted; wherein the corrupting comprises replacing the at least one value of the at least one numerical feature to be corrupted by another at least one value of at least one numerical feature, deleting the at least one value of the at least one numerical feature or blurring the at least one value of the at least one numerical feature to be corrupted;

e. Determining labels by applying the supervised machine learning model on the at least one corrupted subset of the training data set parameterized by at least one current model parameter;

f. Updating the at least one current model parameter depending on the determined labels;

g. Providing the at least one updated model parameter as output.

Accordingly, the invention is directed to a computer-implemented method for determining an updated model parameter. A supervised machine learning model, such as deep learning model, can be parametrized by the updated model parameter, preferably a plurality of updated model parameters.

First, a diverse training data set of a plurality of distinct domains is provided or e.g. received via an input interface of a computing unit. Thereby, the training data set is interpreted in the common sense in the context of supervised machine learning. The training data set comprises a plurality of labelled data samples. The data samples can be equally referred to as data items. The data samples comprise one or more numerical features representing the respective data sample. Labeled data are data samples, wherein the data samples are tagged with one or more labels. Exemplary data samples are images, text files, time-series, sensor data etc.

Referring to images, the numerical features are pixels. Several levels of representation can be used, ranging from the raw input space, e.g. pixel values in the images, to feature maps and embedding vectors yielded by (convolutional) hidden layers of the neural network. This way, the method according to the invention can be applied on any input data sets in a flexible manner.

In further steps, at least one numerical feature to be corrupted is identified in at least one subset of the provided training data set for corruption. Preferably, a subset refers to a predetermined percentage of a randomly sampled batch of the training data set. Thereby, a relevance attribution method is used for this identification on the basis of the subset and the machine learning model. In other words, the most relevant numerical features for the current supervised machine learning model are identified in order to incentivize the discovery of new features over the features that the supervised machine learning model already learned.

In further steps, the identified at least one numerical feature is corrupted. In other words, a part or subset of the training data set and respective numerical features are corrupted.

The corrupted subset is used as input for a supervised machine learning model to make predictions. In other words, the supervised machine learning model is trained with the corrupted subset.

Hence, new feature discovery for each class is enforced by corrupting the input and multi-level representations of the data, thus promoting feature disentanglement.

The predictions are then used to update the one or more current model parameters, preferably a plurality of model parameters and provide the updated model parameters as output of the method.

Preferably, the update is performed multiple times. The reason is that the training of the machine learning model is an iterative optimization process, wherein in each iteration all of the aforementioned method steps are applied. The update can be performed e.g. regularly or on a continuous basis, such as in regular intervals or event-triggered.

The present invention provides a machine learning model which is able to generalize to unseen domains when applied in real-world scenarios involving strong domain shifts. The supervised machine learning model trained on a set of source domains generalizes better in unseen domains without finetuning compared to prior art.

The challenging domain generalization problem is overcome. The challenge lies in the fact that the supervised machine learning model can learn a small set of domain-specific features that, despite yielding a high classification performance in the source domains, are not present in unseen domains.

According to an aspect, the domains differ in the distribution of at least one feature. The features are preferably the same in all domains e.g. pixels and temperature measure. The distribution of the values they take are different between the domains.

For example, the images of cats have the same features in the domain A and the domain B (28x28x3 pixels). The images in the domain A are black and white in this example, whereas in the domain B they are colorful. They are considered to belong to different domains. Thereby, the black and white images have a different distribution of feature, i.e. pixel, values than the colorful ones.

According to an industrial example, two instances of the same machine are deployed in two different production sites in two different countries with different temperatures. The temperature measures in these two cases have different distributions (e.g. a difference of 5 degrees in the mean of the measures). The data collected at the two sites belongs to two different domains. The temperature is a domain-specific feature since its distribution changes depending on the domain.

According to another aspect, the at least one numerical feature is stored in a feature vector as numerical value, preferably a plurality of features is represented by a feature vector or feature matrix. Accordingly, the raw training data or processed data e.g. vector representation can yield as input for the method according to the invention. The advantage is that the method can be flexibly applied to different representations of the raw data.

According to another aspect the at least one subset of the training data set is determined by sampling at least one batch from the training data set, preferably sampling at least one batch from the training data set comprises random sampling of a predetermined percentage of the at least one subset of the training data set. Accordingly, distinct approaches can be used to determine the subset from the training data set. Sampling and in particular random sampling has proven to be advantageous e.g. in view of efficiency.

According to another aspect, a plurality of subsets of the training data set is determined by sampling a plurality of batches from the training data set and the subsequent method steps are performed for each batch of a plurality of batches. Accordingly, the subsets can be designed in form of batches.

According to another aspect, the relevance attribution method is designed as Saliency map, Smooth Grad, CAM ("Class Activation Mapping") or GradCAM. Accordingly, several attribution methods that assign relevance scores to numerical features can be selected in a flexible manner according to the user requirements, underlying use case or technical system.

According to another aspect, the updated model parameter is a domain-agnostic parameter for initialization of the trained supervised machine learning model on a computing unit, wherein the trained supervised machine learning model is applied on an application or live data set from another domain, such as new domain or a domain independent of the diverse domains.

According to another aspect, the value of the at least one numerical feature to be corrupted is replaced by another value during replacement. The other value can be a random value or 0 or determined by an adversarial attacking method, e.g., fast gradient sign method (FGSM).

A further aspect of the invention is a computer program product directly loadable into an internal memory of a computer, comprising software code portions for performing the aforementioned method steps when said computer program product is running on a computer.

A further aspect of the invention is a technical system for performing the aforementioned method steps.

4. Short description of the drawings

In the following detailed description, presently preferred embodiments of the invention are further described with reference to the following figures:

Fig. 1      illustrates a flowchart of the computer-implemented method according to the invention.

Fig. 2      illustrates a schematic representation of the computer-implemented method according to an embodiment.

5. Detailed description of preferred embodiments

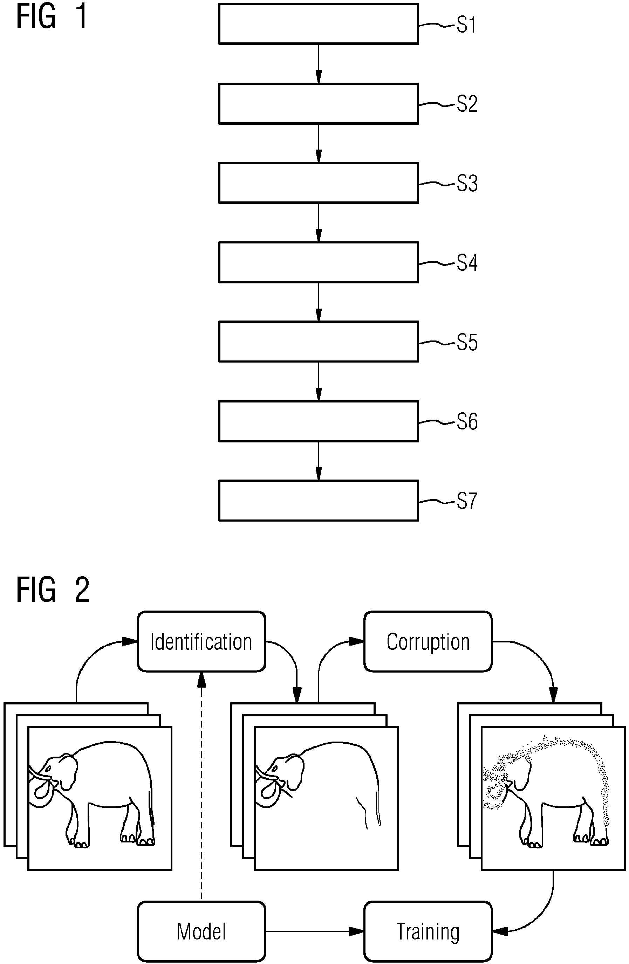

Figure 1 illustrates a flowchart of the method according to the invention with the method steps S1 to S7.

Data preprocessing for the application of the machine learning model on a new scenario or data domain

It is assumed that the data from the new scenario or domain contains the same numerical features as the data used to train the model in order to apply the method according to an embodiment to a new manufacturing scenario or data domain.

In industrial manufacturing, the numerical features are usually recorded using a reasonable set of sensors (e.g. including cameras), which measure for example the torques of the various axes in a milling machine and/or control deviations. Preferably, the data is annotated and pre-processed with the same pre-processing steps applied to the data used to train the model.

Model application

The application of the machine learning model in a new manufacturing scenario consists of deploying the trained machine learning model in production mode.

That means that the machine learning model makes directly predictions on the live data from the new domain:

> Preprocess the live data from the new machine type Mi.
> Initialize the classifier model with the domain-agnostic parameters $\theta$ found during model Training (algorithm above).
> Predict class probabilities for the live data with the model $\theta$.

The method according to an embodiment promotes feature disentanglement by enforcing new feature discovery. Let $F_s$ denote the set of numerical features learned by a machine learning model trained on the source domains and $F_t$ the set of features present in the unseen target domain.

The assumption is that a bigger intersection of $F_s$ and $F_t$ leads to a higher knowledge transfer and therefore a performance increase on the target domain. Since $F_t$ is unknown at training time, the method according to an embodiment preferably maximizes the size of $F_s$ by training the machine learning model to learn as many numerical features as possible.

Therefore, the machine learning model is trained while preventing it from using a part of the most relevant numerical features.

Figure 2 illustrates a schematic representation of the computer-implemented method according to an embodiment. The method comprises three steps: identification of the most relevant numerical features, their corruption and training with the corrupted numerical features.

The method can be applied on several levels of representation of the data ranging from the raw input, e.g. pixels of an elephant trunk to the high-level representations fed to the output layers, e.g. elephant-trunk-detector, including the representations yielded by intermediate layers.

Identification

For identification, a relevance attribution method $A$ is used which computes a relevance attribution map $M$ in order to identify the most relevant numerical features that a machine learning model has learned. Usually, according to prior art, the relevance attribution methods are applied to determine the relevance of numerical features in the input space. According to the invention, the relevance attribution methods are used to determine the relevance of the numerical features learned by intermediate layers as well. According to an embodiment, Saliency Maps and GuidedGrad-CAM are used as relevance attribution methods in the hyperparameter search space of the method. The advantage is that these methods are simple, fast and model-agnostic. Alternatively, other relevance attribution methods can be applied.

The aforementioned Saliency Maps and GuidedGrad-CAM are developed to assign relevance scores to the input features.

Therefore, their usual application is extended to identify relevant numerical features in intermediate representations. Let $y$ and $\hat{y}$ denote the ground truth and the model prediction for a certain datapoint $X$. The Saliency Maps for a representation $R_l$ yielded by layer $l$ is given by

$$M_{l,Saliency} = \frac{\partial(\hat{y} \odot y)}{\partial R_l}$$

**The Saliency Maps** is the case where $l = 0$, i.e.,

$R_0$ is the raw input representation, e.g., pixel values in the case of images.

The class-discriminative relevance map $M_l$ yielded by Grad-CAM for a layer $l$ is given by a sum of the channels of the representation $R_l$ weighted by importance factors $\alpha_c$ for each channel $c$, resulting in

$$M_{l,GradCAM} = ReLU\left(\sum_c \alpha_c R_l^c\right).$$

The importance factors are given by the gradient of the model prediction for the correct class w.r.t. the global-average-pooled representation $R_l$, resulting in

$$\alpha_c = \frac{1}{Z}\sum_i \sum_j \frac{\partial(\hat{y}\odot y)}{\partial R_l^{c,i,j}} \quad .$$

Thereby, Grad-CAM is usually applied to the representation yielded by the last convolutional layer to obtain a relevance map $M$ to assign relevance score to features in the input space, which is then upsampled via bilinear interpolation to the size of the input data. The corresponding relevance map $M_l$ is used to identify the most relevant features in an intermediate representation $R_l$.

According to an embodiment GuidedGrad-CAM is used which yields more fine-grained relevance maps than Grad-CAM by multiplying $M_{l,GradCAM}$ with the relevance maps determined by Guided Back-propagation for the same representation $R_l$. Guided BP modifies Saliency Maps by removing negative gradients when backpropagating through ReLU layers.

Corruption

The identified most relevant numerical features are corrupted based on the relevance attribution map $M$ to force the machine learning model to learn new numerical features.

According to an embodiment the input numerical features, e.g. in image classification the pixels corresponding to an elephant trunk, are replaced by random or black pixels or blurred to corrupt the raw input. The pixel values can also be corrupted by the means of an adversarial attack method, e.g. FGSM. For an intermediate representation level $l$, the original input is fed to the machine learning model up to the corresponding layer to yield the representation $R_l$ which is then corrupted and fed to the next layer. The most relevant features are dropped, i.e. their values are set to zero, to corrupt intermediate embeddings. The percentage of the numerical features corrupted is determined by a hyperparameter $p$.

Training

In each training iteration, a batch of data $B$ and a representation level $l$ are sampled. After applying the aforementioned identification and corruption steps, the resulting corrupted representations are used to train the model $\theta$ by minimizing a loss function $f$ using a gradient-based optimization algorithm and backpropagation. The training procedure is described by the pseudocode for Algorithm 1. The cross-entropy loss can be used and a subset of the sampled data batch can be corrupted in each iteration, controlled by an additional hyperparameter $q$. At test time, the trained machine learning model is applied to the data from the target domains without any corruption.

Algorithm 1 Training procedure

Require: $D_s$: Training data of all source domains
Require: f: Loss function
Require: $\alpha$: Learning rate
Require: L: Set of representation levels including the raw input level
Require: A: Relevance attribution method
Require: p: Percentage of representation to be corrupted

1: Initialize the model parameters θ randomly or from a pre-trained machine learning model
2: while not done do
3: Sample a batch B = {X, y} from $D_s$
4: Sample level of representation 1 from L
5: Feed the batch B through the machine learning model parametrized by θ
6: Get the relevance attribution map $M_l$ by applying the relevance attribution method A on level 1 using the current model parameters θ
7: if 1 = 0 then
8: Corrupt the values in B corresponding to the p% highest values in $M_0$, yielding the corrupted input Bc
9: Feed $B_c$ through the machine learning model to obtain the predictions $\hat{y}$
10: else
11: Feed B through the machine learning model until level 1 to obtain the representation $R_l$
12: Corrupt the values in $R_l$ corresponding to the p% highest values in $M_l$, yielding the corrupted representation $R_{l,c}$
13: Feed $R_{l,c}$ through the model starting from level 1 + 1 to obtain the predictions $\hat{y}$
14: end if
15: Update θ: θ ← θ - $\alpha\nabla$θf(y, $\hat{y}$)
16: end while
17: return Learned model parameters θ

According to an embodiment the CORAL objective is included as an additional objective in the loss function (step 15 in Algorithm). This results in improvements in the domain generalization performance, for some datasets. CORAL minimizes the difference between the means and covariance matrices in feature space of data coming from different source-domains. This is done by adding the aforementioned objective to the optimization objective, e.g., the empirical loss minimization traditionally used in machine learning. The final loss function is a weighted sum. The corrupted data is used to compute these objectives.

Choice of the trained model

According to an embodiment a model selection method that is based on the proposed aforementioned identification and corruption steps is used to choose the model used on the new domain data.

Background & explanation: The method is an iterative optimization, i.e., in each iteration the model parameters change via the applied update. Training the model for too long on the source domains might result in overfitting to their data distributions, leading to a deterioration in performance on the unseen domains. Hence, model selection is important in the domain generalization problem and is an area of research. Most domain generalization methods according to prior art use the model performance on a held-out validation set including data from all source domains as metric to choose the best model. The model performance on this validation set is measured in fixed intervals during training. The model with the highest performance on the validation set is chosen and used on the data from the new domain. According to this embodiment a model selection method is proposed that chooses the model based on its performance on a version of the validation set that is corrupted by the proposed aforementioned identification and corruption methods. It is assumed that a model that has a high performance on a corrupted validation set has learned a rich set of features that allows it to perform well on unseen domains. In another embodiment of this model selection method, the model used for corrupting the validation set can be a domain classification model, i.e., a model that is trained to differentiate between the source domains. The corruption in this case results in corrupting the domain-specific features, hence reducing overfitting.

**Claims**

1. Computer-implemented method for determining at least one updated model parameter, comprising the steps:

   a. Providing a diverse training data set of a plurality of distinct domains comprising a plurality of labelled data samples (S1); wherein each data sample comprises at least one numerical feature representing the respective data sample;
   b. Determining at least one subset of the training data set (S2);
   c. Identifying at least one numerical feature to be corrupted using a relevance attribution method based on the at least one determined subset of the training data set and a supervised machine learning model (S3);
   d. Determining at least one corrupted subset of the training data set by corrupting the at least one identified numerical feature to be corrupted (S4); wherein the corrupting comprises replacing the at least one value of the at least one numerical feature to be corrupted by another at least one value of at least one numerical feature, deleting the at least one value of the at least one numerical feature or blurring the at least one value of the at least one numerical feature to be corrupted;
   e. Determining labels by applying the supervised machine learning model on the at least one corrupted subset of the training data set parameterized by at least one current model parameter (S5);
   f. Updating the at least one current model parameter depending on the determined labels (S6);
   g. Providing the at least one updated model parameter as output (S7).

2. Computer-implemented method according to claim 1, wherein the domains differ in the distribution of at least one feature.

3. Computer-implemented method according to claim 1 or claim 2, wherein the at least one numerical feature is stored in a feature vector as numerical value, preferably a plurality of features is represented by a feature vector or feature matrix.

4. Computer-implemented method according to any of the preceding claims, wherein the at least one subset of the training data set is determined by sampling at least one batch from the training data set, preferably sampling at least one batch from the training data set comprises random sampling of a predetermined percentage of the training data set.

5. Computer-implemented method according to claim 4, wherein a plurality of subsets of the training data set is determined by sampling a plurality of batches from the training data set and the subsequent method steps are performed for each batch of a plurality of batches.

6. Computer-implemented method according to any of the preceding claims, wherein the relevance attribution method is designed as Saliency map or Grad-CAM.

7.  Computer-implemented method, wherein the updated model parameter is a domain-agnostic parameter for initialization of the trained supervised machine learning model on a computing unit, wherein the trained supervised machine learning model is applied on an application or live data set from another domain, preferably new domain or a domain independent of the diverse domains.

8.  Computer-implemented method, wherein the value of the at least one numerical feature to be corrupted is replaced by another value during replacement.

9.  A computer program product directly loadable into an internal memory of a computer, comprising software code portions for performing the steps according any of the preceding claims when said computer program product is running on a computer.

10. A technical system, configured for performing the steps according any of the claims 1 to 6.

FIG 1

FIG 2

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBIN M SCHMIDT: "Explainability-aided Domain Generalization for Image Classification", ARXIV.ORG, CORNELL UNIVERSITY LIBRARY, 201 OLIN LIBRARY CORNELL UNIVERSITY ITHACA, NY 14853, 5 April 2021 (2021-04-05), XP081932496, * abstract; figure 4.1 * * Algorithms 1-2, Sections 1-2.3, 2.6, 3.2.1, 3.3, 4-4.1, and Chapters 5-6. * | 1-10 | INV. G06N3/04 G06N3/08 |
| X | HUANG ZEYI ET AL: "Self-challenging Improves Cross-Domain Generalization", 3 November 2020 (2020-11-03), COMPUTER VISION – ECCV 2020 : 16TH EUROPEAN CONFERENCE, GLASGOW, UK, AUGUST 23-28, 2020 : PROCEEDINGS; PART OF THE LECTURE NOTES IN COMPUTER SCIENCE ; ISSN 0302-9743; [LECTURE NOTES IN COMPUTER SCIENCE; LECT.NOTES COMPUTER], PAGE(S) 124 – 140, XP047569537, ISBN: 978-3-030-58594-5 * abstract; figure 1 * * Algorithm 1; page 125, paragraph 3.3 – page 129, paragraph 4.2 * | 1-10 | |
| X | ZUNINO ANDREA ET AL: "Excitation Dropout: Encouraging Plasticity in Deep Neural Networks", INTERNATIONAL JOURNAL OF COMPUTER VISION, vol. 129, no. 4, 9 January 2021 (2021-01-09), pages 1139-1152, XP037408363, ISSN: 0920-5691, DOI: 10.1007/S11263-020-01422-Y * abstract; figure 1; table 6 * * Sections 1-4.1.2 and 6 * | 1-10 | TECHNICAL FIELDS SEARCHED (IPC) G06N |

-/--

The present search report has been drawn up for all claims

| Place of search | Date of completion of the search | Examiner |
|---|---|---|
| The Hague | 26 January 2022 | Cilia, Elisa |

page 1 of 2

Europäisches
Patentamt

European
Patent Office

Office européen
des brevets

# EUROPEAN SEARCH REPORT

Application Number

EP 21 18 8185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZUNINO ANDREA ET AL: "Explainable Deep Classification Models for Domain Generalization", 2021 IEEE/CVF CONFERENCE ON COMPUTER VISION AND PATTERN RECOGNITION WORKSHOPS (CVPRW), IEEE, 19 June 2021 (2021-06-19), pages 3227-3236, XP033967648, DOI: 10.1109/CVPRW53098.2021.00361 [retrieved on 2021-08-25] * abstract; figures 1-3 * * Sections 1-5, Algorithm 1 * | 1-10 | |
| A | JINDONG WANG ET AL: "Generalizing to Unseen Domains: A Survey on Domain Generalization", ARXIV.ORG, 13 July 2021 (2021-07-13), XP081954266, * the whole document * | 1-10 | |
| A | Zhou Kaiyang ET AL: "Domain Generalization in Vision: A Survey", , 3 March 2021 (2021-03-03), XP055841567, Retrieved from the Internet: URL:https://arxiv.org/pdf/2103.02503.pdf [retrieved on 2021-09-16] * the whole document * | 1-10 | **TECHNICAL FIELDS SEARCHED (IPC)** |
| A | US 2017/220897 A1 (CHIDLOVSKII BORIS [FR] ET AL) 3 August 2017 (2017-08-03) * the whole document * | 1-10 | |

| | The present search report has been drawn up for all claims | | |
|---|---|---|---|
| Place of search **The Hague** | Date of completion of the search **26 January 2022** | Examiner **Cilia, Elisa** | |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 18 8185

This annex lists the patent family members relating to the patent documents cited in  the above-mentioned European search report.
The members are as contained in the European Patent Office EDP file on
The European Patent Office is in no way liable for these particulars which are merely given for the purpose of information.

26-01-2022

| Patent document cited in search report | Publication date | Patent family member(s) | Publication date |
|---|---|---|---|
| US 2017220897 A1 | 03-08-2017 | NONE | |

EPO FORM P0459

For more details about this annex : see Official Journal of the European Patent Office, No. 12/82